# EUROPÄISCHE PATENTSCHRIFT

(11) **EP 0 782 381 B1**
(45) Veröffentlichungstag und Bekanntmachung des Hinweises auf die Patenterteilung: **23.12.1998**
(21) Anmeldenummer: 95932654.7
(22) Anmeldetag: 02.09.1995
(51) Int. Cl.: A01D 43/00

(54) **SELBSTFAHRENDE ERNTEMASCHINE**
SELF-PROPELLED HARVESTER
MOISSONNEUSE AUTOMOTRICE

(30) Priorität: 14.09.1994 DE 4432661; 13.01.1995 DE 19500795
(43) Veröffentlichungstag der Anmeldung: 09.07.1997
(73) Patentinhaber: SAME DEUTZ-FAHR S.P.A., 24047 Treviglio (Bergamo) (IT)
(72) Erfinder: VON ALLWÖRDEN, Wilhelm, D-89168 Oberstotzingen (DE); HÄFELE, Martin, D-73460 Hüttlingen (DE)
(74) Vertreter: Quinterno, Giuseppe
(86) Internationale Anmeldenummer: EP9503457
(87) Internationale Veröffentlichungsnummer: WO9608133

(56) Entgegenhaltungen:
- EP-A- 0 212 270
- EP-A- 0 316 923
- EP-A- 0 408 850
- EP-A- 0 537 621
- EP-A- 0 543 312
- EP-A- 0 589 317
- FR-A- 2 407 661
- GB-A- 2 169 784
- US-A- 2 708 582
- US-A- 2 842 175

## Beschreibung

Die Erfindung betrifft eine selbstfahrende Erntemaschine, insbesondere für Grünfutter, nach dem Oberbegriff des Patentanspruchs 1.

Eine selbstfahrende Erntemaschine ist beispielsweise aus der europäischen Patentanmeldung 0 408 850 A1 bekannt. Bei der in diesem Dokument gezeigten und beschriebenen Erntemaschine wird das Erntegut von einem Schneidwerk geschnitten, von einer Aufbereitungseinrichtung aufbereitet, in einem Puffetraum gesammelt und von einer Dosierwalze dosiert an eine Preßeinrichtung weitergeführt, wobei von der Preßeinrichtung aus dem aufbereiteten Erntegut eine Matte gepreßt wird, die am Ende der Erntemaschine auf dem Feld abgelegt wird. Eine derartige in der Praxis realisierte Erntemaschine hat sich zwar bewährt, es hat sich jedoch herausgestellt, daß der konstruktive Aufwand für den Pufferraum mit der Dosierwalze hoch ist und aufgrund des Dosierens der Leistungsdurchsatz eingeschränkt war.

Durch die EP-A- 0 543 312 ist ein Verfahren und eine Vorrichtung zum Aufbereiten von Erntegut gemäß dem Oberbegriff des Anspruchs 1 bekannt. Es handelt sich dabei um eine Erntemaschine, die gemähtes und zusammengeschwadetes Halm- oder Blattgut aufnimmt, einer Aufbereitungseinrichtung übergibt und dieses danach an eine Preßeinrichtung weiterleitet, die breiter als die Aufbereitungseinrichtung ausgeführt ist. Zwischen der Aufbereitungseinrichtung und der Preßeinrichtung ist eine Verteileinrichtung vorgesehen. Die Verteileinrichtung besteht aus Zinkenkreiseln, aus Streuwalzen, Zinkenförderern, Verteilschnecken oder angetriebenen Verteilzinken. Allen diesen Verteilelementen ist allerdings gemeinsam, daß sie durch eine aktive Einwirkung auf das Erntegut die Verteilung vornehmen. Da zum Antrieb dieser Verteilelemente Kraft benötigt wird, ist diese Verteileinrichtung, energetisch betrachtet, nicht optimal ausgelegt.

Der Erfindung liegt daher die Aufgabe zugrunde, eine selbstfahrende Erntemaschine derart zu gestalten, daß der Durchlauf des Erntegutes durch die einzelnen Einrichtungen der Erntemaschine weitestgehend störungsfrei erfolgt und darüber hinaus der Leistungsdurchsatz gegenüber der bisher bekannten Erntemaschine verbessert beziehungsweise erhöht wird.

Diese Aufgabe ist durch die Merkmale des kennzeichnenden Teiles des Patentanspruches 1 gelöst.

Wie beim Stand der Technik ist es bei der Erfindung vorgesehen, daß die Preßeinrichtung hinter der Aufbereitungseinrichtung unter Weglassung einer Dosiereinrichtung angeordnet ist, so daß das Erntegut nach dem Verlassen der Aufbereitungseinrichtung der Preßeinrichtung ohne wesentliche Zwischenspeicherung zugeführt wird. Dadurch, daß wie beim Stand der Technik die Dosiereinrichtung entfällt, werden wirksam Verstopfungen, die durch die Dosiereinrichtung dadurch verursacht werden, daß das überflüssige Erntegut, welches nicht von der Preßeinrichtung verarbeitet werden kann, wieder zurückgeworfen wird, vermieden. Zu diesem Zweck ist die Preßeinrichtung räumlich hinter der Aufbereitungseinrichtung angeordnet, wobei zwischen der Aufbereitungseinrichtung und der Preßeinrichtung noch ein Zwischenraum vorgesehen werden kann, der als Zwischenspeicher dient, wobei dieser Zwischenspeicher jedoch deutlich kleiner ist als der aus dem Stand der Technik bekannte Pufferraum. Durch die Anordnung der beiden Einrichtung hintereinander wird auch der Durchsatz an Erntegut wirksam erhöht.

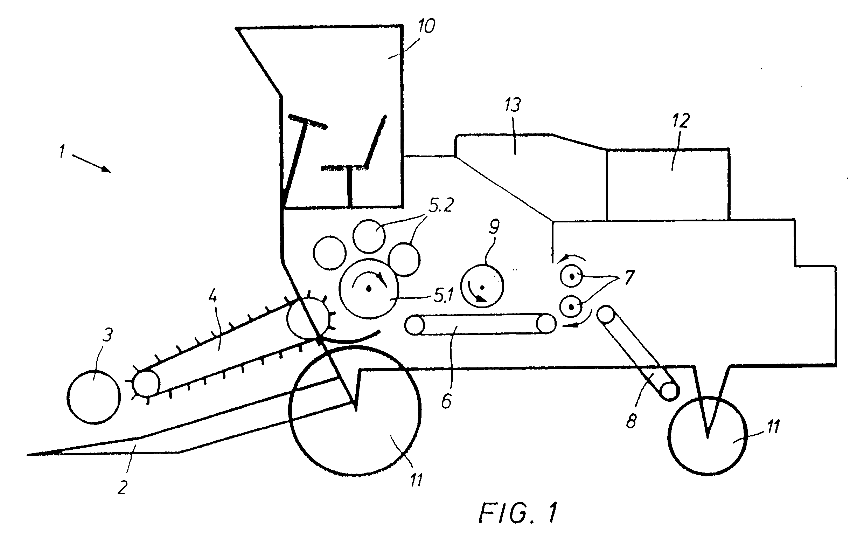

Bei der Erfindung weist die Aufbereitungseinrichtung, wie beim Stand der Technik, eine geringere Breite auf als die Preßeinrichtung, es ist jedoch zusätzlich zwischen der Aufbereitungseinrichtung und der Preßeinrichtung eine Verteileinrichtung angeordnet, wobei die Verteileinrichtung derart in dem Erntegutfluß angeordnet ist und diesen derart beeinflußt, daß das von der Aufbereitungseinrichtung kommende Erntegut auf eine weitestgehend der Breite der Preßeinrichtung entsprechende Breite verteilt wird. Bei der Konstruktion der selbstfahrenden Erntemaschine hat es sich als praktisch herausgestellt, die Aufbereitungseinrichtung in einem Bereich unterhalb eines Fahrerstandes anzuordnen, wobei der Fahrerstand oberhalb einer Vorderradeinheit angeordnet ist (siehe auch Figur 1). Aufgrund dieser konstruktiven Gegebenheit ist die Aufbereitungseinrichtung in etwa zwischen den beiden angetriebenen Rädern der Vorderradeinheit angeordnet, so daß durch die innenliegenden Flanken der Vorderräder und auch durch den seitlich liegenden Antrieb der Aufbereitungseinrichtung die Breite der Aufbereitungseinrichtung begrenzt ist. Da die Preßeinrichtung im wesentlichen in einem Bereich oberhalb einer Hinterradeinheit, deren Räder lenkbar sind, angeordnet ist, kann die Breite der Preßeinrichtung gegenüber der Breite der Aufbereitungseinrichtung deutlich größer ausfallen. In Ergänzung dazu ist es deshalb erfindungsgemäß vorgesehen, daß zwischen der Aufbereitungseinrichtung und der Preßeinrichtung die Verteileinrichtung angeordnet ist, die das von der Aufbereitungseinrichtung kommende aufbereitete Erntegut auf eine weitestgehend der Breite der Preßeinrichtung entsprechende Breite verteilt, um somit möglichst die gesamte Breite der Preßeinrichtung ausnutzen zu können, damit ein größtmöglicher Wirkungsgrad der Preßeinrichtung bei größtmöglichem Wirkungsgrad der Aufbereitungseinrichtung erreicht wird.

In Weiterbildung der Erfindung ist die Verteileinrichtung als Schnecke ausgebildet, wobei die Steigung der Schneckengänge bei Betrachtung in Längsrichtung der Schnecke von der Mitte zu den beiden äußeren Enden der Schnecke zunimmt. Damit ist eine erste konstruktive Ausgestaltung für die Verteileinrichtung angegeben, die wirksam arbeitet und konstruktiv einfach gebaut ist. Die Schneckengänge können gurchgehend oder unterbrochen ausgeführt sein, wobei bei der unterbrochenen Ausführung zumindest ein Teil der Schneckengang-Segmente, in vorteilhafter Weise jedoch alle Schneckengang-Segmente, verstellbar sind. Alternativ zu der Schnecke ist es denkbar, eine Walze mit auf der Oberfläche angeordneten Zinken einzusetzen, wobei die Zinken ähnlich dem Schneckengang oder gleichmäßig auf der Oberfläche angeordnet sind. Auch hier ist es denkbar, einen Teil der Zinken feststehend (zum Beispiel die Zinken in der Mitte) und einen weiteren Teil der Zinken verstellbar anzuordnen oder alle Zinken zu verstellen.

In Weiterbildung der Erfindung weist die Verteileinrichtung eine Zinkenwalze mit einer dahinter angeordneten Leiteinrichtung auf, wobei es sich um eine weitere konstruktive Ausgestaltung der Verteileinrichtung handelt. Eine derart ausgestaltete Verteileinrichtung hat darüber hinaus den Vorteil, daß die Zinkenwalze einfach und kostengünstig herstellbar ist, wobei die vorgeschlagene Leiteinrichtung (wie sie in den Figuren noch zu beschreiben ist) ein Standardbauteil aus dem Mähdrescherbereich ist, so daß hier kostengünstige Einsparungseffekte ausnützbar sind.

In Weiterbildung der Erfindung ist die Verteileinrichtung zumindest teilweise, insbesondere ganz, aus dem Erntegutfluß herausschwenkbar. In Ergänzung dazu ist es vorgesehen, daß die Verteileinrichtung in Abhängigkeit des Volumens des Erntegutes aus dem Erntegutfluß herausschwenkbar, insbesondere automatisch herausschwenkbar, ist. Dies hat den Vorteil, daß je nach Volumen an Erntegut, das geschnitten, der Aufbereitungseinrichtung zugeführt und von der Aufbereitungseinrichtung abgegeben wird, das Erntegut über die gesamte Breite der Preßeinrichtung verteilt wird oder nicht. Fällt lediglich ein geringes Volumen an Erntegut an, da beispielsweise der Bestand auf dem Feld gering ist oder die Emtemaschine am Feldrand wendet, wird in vorteilhafter Weise die Verteileinrichtung teilweise oder insbesondere ganz aus dem Erntegutfluß herausgeschwenkt, so daß das von der Aufbereitungseinrichtung kommende aufbereitete Erntegut auf einer Breite von der Preßeinrichtung verarbeitet wird, die der Breite der Aufbereitungseinrichtung entspricht. Somit wird von der Preßeinrichtung eine Matte erzeugt, die annähernd die Breite der Aufbereitungseinrichtung aufweist. Fällt ein höheres Volumen an, wird die Verteileinrichtung wieder in den Erntegutfluß hineingeschwenkt, so daß von der Preßeinrichtung eine Matte erzeugt wird, die nun im wesentlichen der Breite der Preßeinrichtung entspricht. Zur Verschwenkung der Verteileinrichtung in Abhängigkeit des Volumens des Erntegutes kann ein Sensor vorgesehen werden, der beispielsweise das Volumen des geschnittenen oder auch das Volumen des aufbereiteten Erntegutes erfaßt und einen Aktuator (beispielsweise Hydraulikzylinder) ansteuert, der die Verteileinrichtung verschwenkt.

In Weiterbildung der Erfindung ist zumindest in dem Bereich zwischen dem Ende der Aufbereitungseinrichtung und dem Anfang der Preßeinrichtung ein Förderband angeordnet, das das Erntegut von der Aufbereitungseinrichtung in Richtung der Preßeinrichtung befördert und somit den Bewegungsfluß des Erntegutes zur Erhöhung des Durchsatzes unterstützt. Darüber hinaus stellt das Förderband eine räumliche Begrenzung dar, wobei das Förderband unterhalb der Verteileinrichtung angeordnet ist.

In Weiterbildung der Erfindung ist eine Einrichtung im Bereich der Fördereinrichtung vorgesehen, um die Breite eines Förderbereiches der Fördereinrichtung einzustellen, insbesondere zu verkleinern. Dies hat den Vorteil, daß schon im Bereich vor der Aufbereitungseinrichtung bei geringen Erntegutmengen der Erntegutstrom in seiner Breite reduziert werden kann, um diesen mit einer geringeren Breite (geringer als die Breite der Aufbereitungseinrichtung) durch die Aufbereitungs- und die Preßeinrichtung zu fördern, damit die zuverlässige und optimale Aufbereitung und Pressung auch bei kleinen Erntegutmengen (Kurzschnitt) gewährleistet ist. Denkbar sind hier beispielsweise Schieber vor der Eintrittsöffnung der Förder- oder der Aufbereitungseinrichtung oder auch verschwenkbare oder verschiebbare Leitbleche im Bereich der Fördereinrichtung, mit denen die Breite des Erntegutstromes eingestellt. insbesondere ausgehend von der Breite der Förder- oder der Aufbereitungseinrichtung verkleinert werden kann. Erfolgt eine Verkleinerung der Breite, ist sicherzustellen, daß der schmale Erntegutstrom nicht von der Verteileinrichtung verbreitert wird.

In Weiterbildung der Erfindung ist die die auf dem Verteilerblech angeordnete Stege aufweisende Leiteinrichtung in eine oszillierende Bewegung versetzbar. Dies erfolgt insbesondere dann, wenn die Verteileinrichtung als Verteilerblech mit darauf angeordneten Stegen ausgebildet ist. Eine solche oszillierende Bewegung hat den Vorteil, daß dadurch eine weitere Verteilung und Vergleichmäßigung des Erntegutflußes, der aus aufbereitetem Erntegut besteht, erreicht wird und der Presseinrichtung zugeführt wird. Durch die Vergleichmäßigung ist eine wirksame Erhöhung des Durchsatzes an Erntegut gegeben. Außerdem wird dadurch erreicht, daß der Presseinrichtung das aufbereitete Erntegut gleichmäßiger zugeführt wird, wodurch eine gleichmäßige Bildung der Matte, insbesondere hinsichtlich der Breite und der Dicke der Matte, erreicht wird. In dieser Ausgestaltung ist vorgesehen, daß die auf dem Verteilerblech angeordneten Stege, die entweder fest oder zumindest teilweise drehbewegbar auf dem Verteilerblech angeordnet sind, zusammen mit dem Verteilerblech in die oszillierende Bewegung versetzt werden.

In Weiterbildung der Erfindung ist zumindest ein Teil der Stege in eine oszillierende Bewegung versetzbar, wodurch der oben geschilderte Effekt erreicht wird, wobei jedoch das Verteilerblech fest oder drehfest (zum Herausschwenken aus dem Erntegutfluß) angeordnet ist. Damit ist eine alternative Ausgestaltung zur Erreichung der oszillierenden Bewegung gegeben.

In Ergänzung zu den genannten Ausgestaltungen der Leiteinrichtung ist weiterhin vorgesehen, daß in Richtung des Erntegutflußes betrachtet hinter der Verteileinrichtung, insbesondere hinter der Leiteinrichtung, eine weitere Einrichtung zur Beeinflussung des Erntegutflußes angeordnet ist. Die Anordnung einer solchen weiteren Einrichtung hat zum einen den Vorteil, daß für den Fall, daß die Verteileinrichtung als Verteilerblech mit darauf fest angeordneten Stegen vorgesehen ist, eine gleichmäßigere Verteilung des aufbereiteten Erntegutes, das der Presseinrichtung zugeführt wird, erreicht wird. Weiterhin wird durch die weitere Einrichtung der Effekt erreicht, daß insbesondere bei großen Mengen an Erntegut die Verteilung, die durch die Verteileinrichtung vorgenommen wird, durch die weitere Einrichtung verstärkt wird, so daß auch dadurch eine Erhöhung des Durchsatzes gegeben ist. Diese weitere Einrichtung kann beispielsweise wieder als Schnecke, als Zinkenwalze oder auch aus vertikal umlaufenden Zinken (wie es beispielsweise von den Kreiselheuern bekannt ist), ausgestaltet sein.

Eine selbstfahrende Erntemaschine sowie ein konkretes Ausführungsbeispiel für die Verteileinrichtung ist im folgenden beschrieben und in den Figuren gezeigt.

Es zeigen:
Fig. 1: eine selbstfahrende Erntemaschine,
Fig. 2: eine erfindungsgemäß ausgestaltete Verteileinrichtung,
Fig. 3: Ausgestaltungen einer Leiteinrichtung,
Fig. 4: Ausgestaltungen einer variablen Leiteinrichtung.
Fig. 5: eine weitere erfindungsgemäß ausgestaltete Verteileinrichtung,

Figur 1 zeigt eine selbstfahrende Erntemaschine 1, insbesondere für Grünfutter, die eine Schneideinrichtung 2 (schematisch dargestellt) zum Schneiden des Erntegutes, eine Aufbereitungseinrichtung, die aus einer Zentralwalze 5.1 sowie mehreren Planetenwalzen 5.2 besteht, wobei die Walzen unterschiedliche Umfangsgeschwindigkeiten haben und gegensinnig angetrieben sind, zum Aufbereiten des Erntegutes und ein sich an die Aufbereitungseinrichtung anschließendes Förderband 6, das zu einer Preßeinrichtung, die aus zumindest zwei einen Spalt bildenden Preßwalzen 7 besteht, zum Pressen des Erntegutes zu einer Matte und einer Ablageeinrichtung 8 für die Matte auf dem Feld, aufweist. Bei der Schneideinrichtung 2 handelt es sich in vorteilhafter Weise um ein Scheibenmähwerk, welches in einer Wanne eingebaut ist unter Ergänzung einer Einzugsschnecke 3, wobei es sich bei der Wanne in vorteilhafter Weise um ein Bauteil aus dem Mähdrescherbereich handelt. Diese Wanne ist an einem nicht gezeigten Förderkanal anbaubar, in dem eine Fördereinrichtung 4 integriert ist, wobei es sich bei der Fördereinrichtung 4 in vorteilhafter Weise um einen Kettenförderer, ebenfalls aus dem Mähdrescherbereich, handelt, der das von der Schneideinrichtung 2 geschnittene Erntegut in Richtung der Aufbereitungseinrichtung befördert. Die Abnehmbarkeit der Wanne im Anfangsbereich des Förderkanales hat den Vorteil, daß neben dem Scheibenmähwerk auch weitere Mähwerke angebaut werden können, wobei die Auswahl des anzubauenden Mähwerkes in Abhängigkeit des Erntegutes erfolgt.

Wie in Figur 1 gezeigt ist, ist zwischen der Aufbereitungseinrichtung (Zentralwalze 5.1 und Planetenwalzen 5.2, denkbar ist auch der Einsatz eines Aufbereiters nach der Reihenwalzentechnik) und der Preßeinrichtung (Preßwalzen 7), wobei die Aufbereitungseinrichtung und die Preßeinrichtung direkt hintereinander angeordnet sind, die Verteileinrichtung angeordnet, wobei diese Verteileinrichtung als eine schematisch dargestellte Verteilerschnecke 9 ausgebildet ist, wobei der Pfeil, wie auch bei den übrigen Walzen, den Drehsinn der Verteilerschnecke 9 angibt.

Weiterhin weist die Erntemaschine 1 einen Fahrerstand 10, Radeinheiten 11 und eine Brennkraftmaschine 12 sowie einen Kraftstofftank 13 auf. Ausgehend von der Brennkraftmaschine 12 erfolgt sowohl der Antrieb der Erntemaschine 1 selbst als auch gegebenenfalls unter Zwischenschaltung von Kupplungen und Getrieben der Antrieb der einzelnen Einrichtungen der Erntemaschine 1. Die in Figur 1 gezeigte Aufbereitungseinrichtung ist zur besseren Darstellung in dem Bereich zwischen dem Fahrerstand 10 und vorderen Radeinheit 11 erhöht dargestellt, wobei jedoch in der Praxis die Aufbereitungseinrichtung "tiefer" liegt, so daß die Breite der Zentralwalze 5.1 und der Planetenwalzen 5.2 durch die nach innen gerichteten Flanken der Reifen der Radeinheit 11 und den seitlichen Antrieb (Riementrieb) der Walzen der Aufbereitungseinrichtung beschränkt ist. Liegt wie beispielsweise in Figur 1 gezeigt eine derartige Beschränkung der Breite nicht vor, kann die Aufbereitungseinrichtung breiter, insbesondere in einer Breite, die der Breite der Preßeinrichtung entspricht, ausgeführt sein. In einem solchen Fall ist es denkbar, eine Verteileinrichtung (beispielsweise die Verteilerschnecke oder eine Verteilereinrichtung, wie sie im folgenden beschrieben wird) in dem Bereich zwischen dem Ende der Fördereinrichtung 4 und dem Einzugsbereich der Aufbereitungseinrichtung anzuordnen, so daß an dieser Stelle das Erntegut von der Breite der Fördereinrichtung 4 auf die größere Breite der Aufbereitungseinrichtung verteilt wird. Auch hier finden die vorgeschlagenen Konstruktionen der Verteilereinrichtung Anwendung.

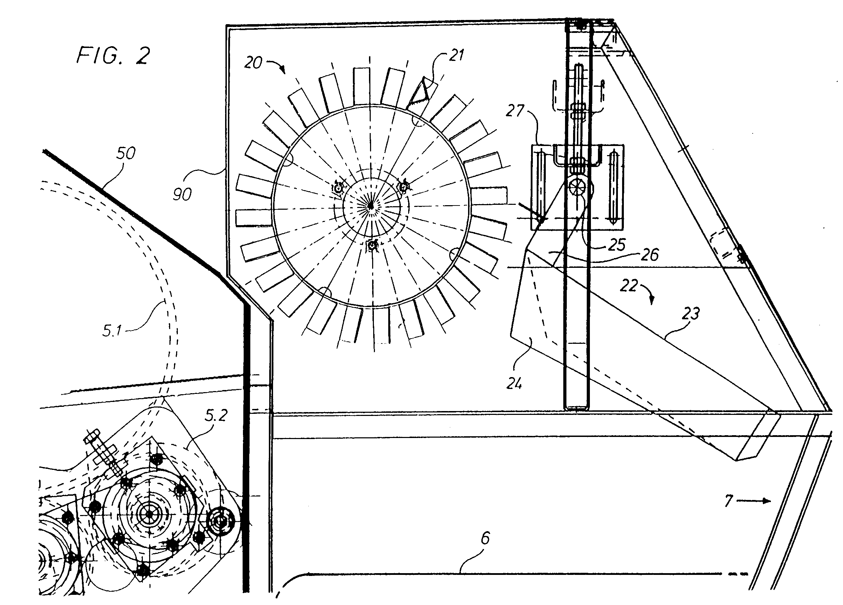

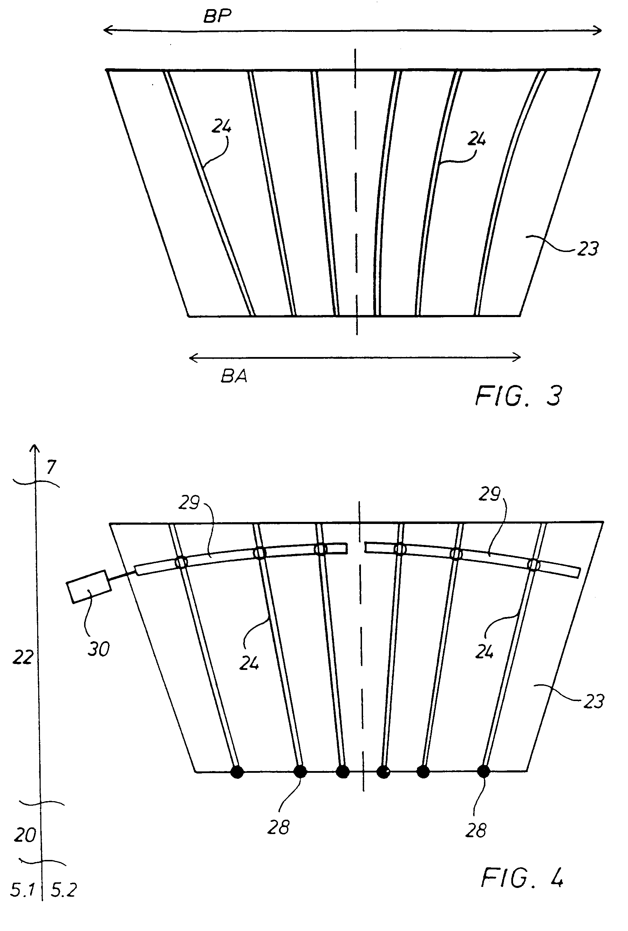

In Figur 2 ist eine konstruktive Ausgestaltung einer Verteileinrichtung gezeigt, wobei die Verteileinrichtung eine Zinkenwalze 20, auf deren Umfangsfläche Zinken 21 angeordnet sind, die beispielsweise einen dreieckförmigen Querschnitt aufweisen, aufweist mit einer dahinter angeordneten Leiteinrichtung 22. Die Leiteinrichtung 22 besteht aus einem Verteilerblech 23, auf dem senkrecht zur Oberfäche Stege 24 angeordnet sind. Das Verteilerblech 23 erstreckt sich zumindest über die Breite der Aufbereitungseinrichtung, in vorteilhafter Weise jedoch über die Breite der Preßeinrichtung beziehungsweise des Förderbandes 6. Das von der Aufbereitungseinrichtung, die zumindest mit der Zentralwalze 5.1 und den Planetenwalzen 5.2 eine eigenständige Einheit 50, die auswechselbar ist, bildet, abgegeben Erntegut wird von den Zinken 21 der rotierenden Zinkenwalze 20 erfaßt und gegen die Leiteinrichtung 22, daß heißt gegen die Unterseite des Verteilerbleches 23, auf dem die Stege 24 angeordnet sind, geschleudert. Hierbei kann die Drehzahl der Zinkenwalze 20 derart gewählt werden, daß die Geschwindigkeit des Erntegutes, mit welcher die Aufbereitungseinrichtung verlassen wird, erhöht, verlangsamt oder konstant gehalten wird. Die Anordnung der Stege 24 ist in den Figuren 3 beziehungsweise 4 gezeigt.

Um die Leiteinrichtung 22 zumindest teilweise, insbesondere ganz, aus dem Erntegutfluß herauszuschwenken, ist die Leiteinrichtung 22 zum einen um einen Drehpunkt 25 an einem Ausleger 26 gelagert, wobei der Drehpunkt 25 sich in einem Aufzug 27 befindet. Denkbar ist es auch, die Leiteinrichtung 22 lediglich um den Drehpunkt 25 oder lediglich mittels des Aufzuges 27 aus dem Erntegutfluß herauszuschwenken. Die in Figur 2 gezeigte Anordnung arbeitet wie folgt: Mittels des Aufzuges 27 kann die Leiteinrichtung 22 entweder komplett in den Erntegutfluß hineingeschwenkt oder aus diesem herausgeschwenkt werden, wie dies die gestrichelte Stellung andeutet. Darüber hinaus sind Zwischenstellungen des Aufzuges 27 denkbar. Die Verstellung des Aufzuges 27 erfolgt manuell oder automatisch insbesondere in Abhängigkeit eines erfaßten Volumens des Erntegutes. Ergänzend dazu ist die Leiteinrichtung 22 um den Drehpunkt 25 federkraftbeaufschlagt (nicht gezeigt) gelagert. Durch diese Federkraft (Druckfeder) wird die Leiteinrichtung in einer definierten Stellung gehalten, wobei jedoch im Falle eins erhöhten Erntegutvolumens die Leiteinrichtung 22 um den Drehpunkt 25 gegen die Federkraft zumindest teilweise aus dem Erntegutfluß herausgeschwenkt werden kann. Weiterhin ist in Figur 2 gezeigt, daß auch die Verteileinrichtung eine eigenständige Einheit 90 bildet, die beispielsweise zu Wartungsarbeiten komplett ausgebaut werden kann. Das somit von der Aufbereitungseinrichtung (Einheit 50) kommende Erntegut wird von der Zinkenwalze 20 und der sich anschließenden Leiteinrichtung 22 unter Unterstützung der Bewegungsrichtung des Förderbandes 6 in Richtung der Preßeinrichtung (angedeutet durch den Pfeil mit der Bezugsziffer 7 in Figur 2) befördert. Hierbei kann auch die Preßeinrichtung eine eigenständige und nicht näher bezeichnete Einheit, die ebenfalls auswechselbar ist, bilden. Weiterhin ist es konstruktiv ausführbar, daß das Förderband entweder um zwei eigenständige Rollen herumgeführt ist (wie es beispielsweise in Figur 1 gezeigt ist) oder daß eine Rolle, um die das Förderband 6 herumgeführt ist, zumindest eine der Preßwalzen 7 ist. An dieser Stelle ist zu erwähnen, daß die Preßeinrichtung auch mehr als ein Preßwalzenpaar 7 aufweisen kann.

Figur 3 zeigt eine konstruktive Ausgestaltung der Leiteinrichtung 22, wobei in Figur 3 die Unterseite des Verteilerbleches 23, die in Richtung des Erntegutflusses zeigt, gezeigt ist. Im linken Teil der Figur 3 beziehungsweise des Verteilerbleches 23 sind die Stege 24 gerade, und im rechten Teil bogenförmig gekrümmt ausgebildet. In vorteilhafter Weise sind die auf dem Verteilerblech 23 angeordneten Stege 24 entweder nur gerade oder nur bogenförmig gekrümmt ausgebildet. Wie in Figur 3 gezeigt ist, ist bei Betrachtung in Längsrichtung des Verteilerbleches 23 zumindest ein sich im mittleren Bereich befindender Steg 24 im wesentlichen in Längsrichtung (dargestellt durch die gestrichelte Linie) des Erntegutflusses angeordnet, wobei die in Richtung der beiden äußeren Bereiche des Verteilerbleches 23 angeordneten weiteren Stege 24 derart von der Längsrichtung abweichen, daß das von der Aufbereitungseinrichtung (wobei die Breite der Aufbereitungseinrichtung mit BA bezeichnet ist) beziehungsweise der Zinkenwalze 20 kommende Erntegut auf eine weitestgehend der Breite der Preßeinrichtung entsprechende Breite, die mit der Bezugsziffer BP bezeichnet ist, verteilt wird. In Ergänzung zu der Ausgestaltung gemäß Figur 3 ist es denkbar, auf dem Verteilerblech 23 mehr oder weniger als die sechs gezeigten Stege 24 anzuordnen, wobei auch die Höhe der Stege 24 variieren kann und auch am äußeren Längsbereich des Verteilerbleches 23 Stege 24 angeordnet sein können. Auch ist es denkbar, einen gerade ausgerichteten Steg 24 genau auf der Längsachse anzuordnen. Zur Unterstützung des Verteilereffektes ist es auch denkbar, zumindest einen Teil der Stege fächerförmig auszuführen.

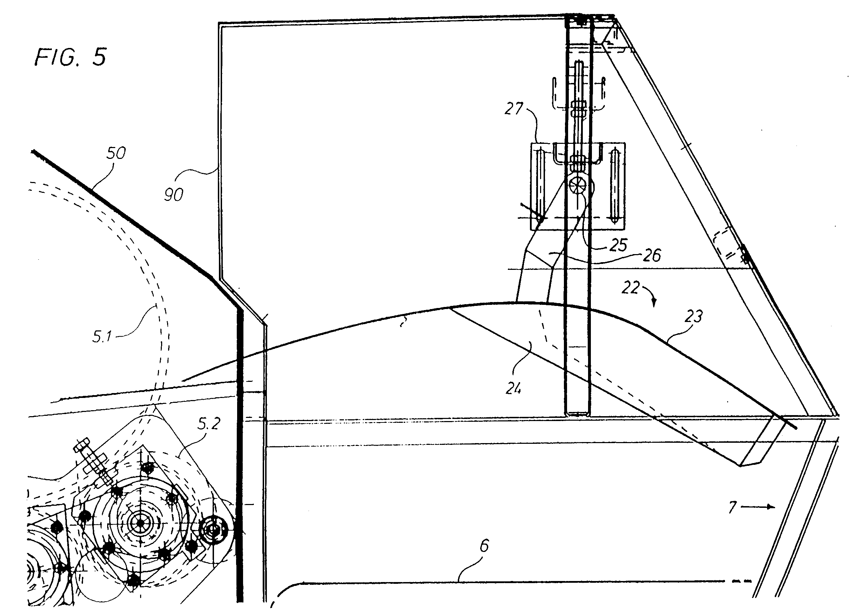

Eine weitere Ausgestaltung der Leiteinrichtung 22 ist in Figur 4 gezeigt. Bei dieser Ausgestaltung sind die Stege 24 um einen Verschwenkpunkt 28 herum verschwenkbar, wobei die Verschwenkung mittels eines Verschwenkhebels 29 (beziehungsweise mittels zweier Verschwenkhebel 29) erfolgt. Die Verschwenkung kann, insbesondere in Abhängigkeit des erfaßten Erntegutvolumens, dadurch automatisiert werden, daß zumindest ein Hydraulikzylinder 30 an dem Verschwenkhebel 29 angreift und die Verschwenkung kontinuierlich erfolgt. In einer einfachen Ausgestaltung kann die Verschwenkung der Verschwenkhebel 29 manuell erfolgen, wobei beispielsweise die Stege 24 aufgrund einer Rasterung in verschiedene diskontinuierliche Stellungen einstellbar sind. Auf der Skala links neben dem Verteilerblech 23 ist der Erntegutfluß gezeigt, der vor dem Verteilerblech 23, im Bereich des Verteilerbleches 23 beziehungsweise hinter dem Verteilerblech 23 verläuft. Das Erntegut, das von der Aufbereitungseinrichtung (Walzen 5.1 und 5.2) aufbereitet wird, wird von der Zinkenwalze 20 erfaßt und gegen die Leiteinrichtung 22 geschleudert, wobei in Abhängigkeit der Stellung der Stege 24 das Erntegut von der Leiteinrichtung 22 auf eine Breite verteilt wird, die im wesentlichen zwischen der Breite BA und der Breite BP liegt, wonach es dann der Preßeinrichtung (Walzen 7) zugeführt wird. Selbstverständlich kann die Verteileinrichtung auch dergestalt ausgeführt sein, daß das Erntegut von der Leiteinrichtung 22 auf eine Breite verteilt wird, die kleiner ist als die Breite BA, wonach es dann der Preßeinrichtung (Walzen 7) zugeführt wird. Dies hat den Vorteil, daß auch geringe Mengen Erntegut zuverlässig zu einer Matte gepresst werden können. Auch diese Ausgestaltung ist erfindungswesentlich.

Auch die weitere Einrichtung zur Beeinflussung des Erntegutes, die hinter der Verteileinrichtung angeordnet ist, kann derart gestaltet sein (beispielsweise in einer Ausgestaltung, wie sie von Heuschwadern bekannt ist), daß das von der Aufbereitungseinrichtung bzw. der Verteilenrichtung kommende aufbereitete Erntegut auf eine Breite verteilt (zusammengeführt) wird, die kleiner ist als die Breite BA, wonach es dann der Presseinrichtung zugeführt wird. Dies hat insbesondere dann den Vorteil, wenn die Verteileinrichtung derart gestaltet ist, daß sie das von der Aufbereitungseinrichtung kommende Erntegut eigentlich auf eine Breite BP verteilt, die größer ist als die Breite BA, wodurch es jedoch durch zu geringe Mengen an Erntegut zu keiner zuverlässigen Bildung der Matte kommen würde. Somit kann mittels der weiteren Einrichtung das aufbereitete Erntegut wieder zusammengeführt werden, so daß einerseits die Matte zuverlässig gepresst werden kann und zum anderen, beispielsweise durch Hinein- bzw. Herausschwenken der weiteren Einrichtung sämtliche, anfallenden Mengen an aufbereitetem Erntegut (sowohl geringe als auch große Mengen) zuverlässig zu einer Matte gepresst werden können.

Wie in Figur 4 gezeigt ist, sind die Stege 24 über den Verschwenkhebel 29 verstellbar. Hier ist es zur Erzielung der oszillierenden Bewegung denkbar, daß durch eine entsprechende Betätigung des Hydraulikzylinders 30 durch eine nicht gezeigte Steuereinrichtung dieser den Verschwenkhebel 29 und damit die Stege 24 in die oszillierende Bewegung Drehpunkt 28 versetzt. Alternativ und/oder ergänzend dazu ist es denkbar, durch eine entsprechende Lagerung des Verteilerbleches 23 um einen nicht gezeigten Drehpunkt herum das Verteilerblech 23 selber in die oszillierende Bewegung zu versetzen, wozu der Hydraulikzylinder 30 dann an dem Verteilerblech 23 angreift. Diese im wesentlichen vertikale oszillierende Bewegung kann ersetzt oder ergänzt werden durch eine im wesentlichen horizontale oszillierende Bewegung, die durch eine entsprechende Anlenkung des Verteilerbleches 23 über den Ausleger 26 bzw. den Aufzug 27 erfolgt. Ebenso ist es denkbar, daß zur Vergleichmäßigung des Erntegutflußes das Verteilerblech 23 in die oszillierende Bewegung versetzt wird, während über den in Figur 4 gezeigten Hydraulikzylinder 30 die Breite, auf die das aufbereitete Erntegut verteilt wird, eingestellt wird. Die oszillierende Bewegung des Verteilerbleches 23 und/oder der Stege 24 erfolgt in vorteilhafter Weise unter Weglassung beispielsweise der in Figur 1 gezeigten Verteilerschnecke 9 bzw. der in Figur 2 gezeigten Zinkenwalze 20. Aber auch mit den genannten Verteileinrichtungen kann die oszillierende Bewegung vorgesehen werden.

Zur Reinigung der Zinken der Zinkenwalze beziehungsweise der Stege ist es denkbar, beispielsweise in vorgebbaren Zeitabständen oder Inbetriebnahme oder nach dem Einsatz der Erntemaschine eine kammartige Einrichtung über die Zinken (sofern diese in Umfangsrichtung hinetreinander angeordnet und nicht versetzt sind) beziehungsweise über die Stege zu ziehen und somit vorhandene Verunreinigungen abzuziehen.

Figur 5 zeigt eine weitere erfindungsgemäß ausgestaltete Verteileinrichtung.

Diese weitere konstruktive Ausgestaltung der Leiteinrichtung 22 besteht darin, daß das schon in Figur 2 gezeigte Verteilerblech 23 bis in den Austrittsbereich der Aufbereitungseinrichtung geführt ist und wiederum auf seiner Unterseite Stege 24 aufweist. Bei dieser Ausgestaltung entfällt die Anordnung der Zinkenwalze 20, weil das aufbereitete Erntegut die Aufbereitungseinrichtung mit einer solchen Geschwindigkeit verläßt, durch die das aufbereitete Erntegut gegen die Unterseite des Verteilerbleches 23 geschleudert, von den Stegen 24 auf eine größere (bei verstellbaren Stegen auch auf eine kleinere) Breite verteilt wird und danach der Presseinrichtung zugeführt wird. In Figur 5 ist gezeigt, daß das Verteilerblech wiederum an dem Aufzug 27 an dem Ausleger 26 befestigt ist, wobei dieses Verteilerblech 23 auch feststehend in dem Bereich oberhalb des Förderbandes 6 angeordnet sein kann. Denkbar ist auch, das Verteilerblech 23 gemäß Fig. 5 an dem auf der Aufbereitungseinrichtung oder der Presseinrichtung zugewandten Ende um eine Längsachse herum zu verschwenken, so daß dieses Verteilerblech in den Auswurfbereich der Aufbereitungseinrichtung eingeschwenkt oder aus diesem herausgeschwenkt werden kann. Eine Anordnung der Stege 24 auf dem Verteilerblech 23 kann auch hier gemäß den in Figur 3 und 4 gezeigten Anordnungen (feststehend oder verstellbar) erfolgen.

## Patentansprüche

1. Selbstfahrende Erntemaschine (1), insbesondere für Grünfutter, die:
- eine Schneideinrichtung (2) zum Schneiden des Erntegutes,
- eine Fördereinrichtung (4) zum Fördern des Erntegutes,
- eine Aufbereitungseinrichtung (5.1, 5.2) zum Aufbereiten des Erntegutes,
- eine hinter der Aufbereitungseinrichtung 5.1, 5.2) angeordnete Preßeinrichtung (7) zum Pressen des Erntegutes zu einer Matte und
- eine Ablageeinrichtung für die Matte auf dem Feld
aufweist, wobei die Aufbereitungseinrichtung (5.1, 5.2) eine geringere Breite aufweist als die Preßeinrichtung (7) und zwischen der Aufbereitungseinrichtung (5.1, 5.2) und der Preßeinrichtung (7) unter Weglassen einer Dosiereinrichtung eine Verteileinrichtung angeordnet ist,
***dadurch gekennzeichnet,*** daß die Verteileinrichtung aus einem über dem Erntegutfluß angeordneten Verteilerblech (23) besteht, auf dem senkrecht dazu Stege (24) angeordnet sind, die in Richtung Erntegut ausgerichtet sind, wobei bei Betrachtung in Längsrichtung des Verteilerbleches (23) zumindest ein sich im mittleren Bereich der Längsachse befindender Steg (24) im wesentlichen in Längsrichtung des Erntegutflusses angeordnet ist und die in Richtung der beiden äußeren Bereiche des Verteilerbleches (23) angeordneten weiteren Stege (24) derart von der Längsrichtung abweichen, daß das von der Aufbereitungseinrichtung (5.1, 5.2) kommende Erntegut auf eine weitestgehend der Breite der Preßeinrichtung (7) entsprechende Breite verteilt wird.

2. Selbstfahrende Erntemaschine nach Anspruch 1,
***dadurch gekennzeichnet,*** daß die Stege (24) zumindest teilweise drehbewegbar sind, wobei die Drehbewegbarkeit, insbesondere automatisch, in Abhängigkeit des Volumens des Erntegutes erfolgt.

3. Selbstfahrende Erntemaschine nach Anspruch 1 oder 2,
***dadurch gekennzeichnet,*** daß die Stege (24) gerade und/oder bogenförmig gekrümmt ausgebildet sind.

4. Selbstfahrende Erntemaschine nach einem der vorhergehenden Ansprüche,
***dadurch gekennzeichnet,*** daß die Verteileinrichtung zumindest teilweise, insbesondere ganz, aus dem Erntegutfluß herausschwenkbar ist.

5. Selbstfahrende Erntemaschine nach einem der vorhergehenden Ansprüche,
***dadurch gekennzeichnet,*** daß die Verteileinrichtung in Abhängigkeit des Volumens des Erntegutes herausschwenkbar, insbesondere automatisch herausschwenkbar, ist.

6. Selbstfahrende Erntemaschine nach einem der vorhergehenden Ansprüche,
***dadurch gekennzeichnet,*** daß zwischen der Aufbereitungseinrichtung (5.1, 5.2) und dem Verteilerblech (23) im wesentlichen oberhalb des Erntegutflusses eine Zinkenwalze (20) angeordnet ist.

7. Selbstfahrende Erntemaschine nach einem der vorhergehenden Ansprüche,
***dadurch gekennzeichnet,*** daß zumindest in dem Bereich zwischen dem Ende der Aufbereitungseinrichtung (5.1, 5.2) und dem Anfang der Preßeinrichtung (7) ein Förderband (6) angeordnet ist.

8. Selbstfahrende Erntemaschine nach einem der vorhergehenden Ansprüche,
***dadurch gekennzeichnet,*** daß eine Einrichtung im Bereich der Fördereinrichtung (4) vorgesehen ist, um die Breite eines Förderbereiches der Fördereinrichtung (4) einzustellen, insbesondere zu verkleinern.

9. Selbstfahrende Erntemaschine nach einem der vorhergehenden Ansprüche,
***dadurch gekennzeichnet,*** daß die die auf dem Verteilerblech (23) angeordneten Stege (24) aufweisende Verteileinrichtung in eine oszillierende Bewegung versetzbar ist.

10. Selbstfahrende Erntemaschine nach einem der vorhergehenden Ansprüche,
***dadurch gekennzeichnet,*** daß zumindest ein Teil der Stege (24) in eine oszillierende Bewegung versetzbar sind.

11. Selbstfahrende Erntemaschine nach einem der vorhergehenden Ansprüche,
***dadurch gekennzeichnet,*** daß in Richtung des Erntegutflußes betrachtet hinter der Verteileinrichtung eine weitere Einrichtung zur Beeinflussung des Erntegutflußes angeordnet ist.

## Claims

1. A self-propelled harvesting machine (1), especially for green fodder, which has:
- a cutting arrangement (2) for cutting the harvested material,
- a forwarding device (4) to transport the harvested material,
- a preparation arrangement (5.1, 5.2) to prepare the harvested material,
- a pressing arrangement (7) arranged after the preparation arrangement (5.1, 5.2) to press the harvested material into a mat and - a discharging arrangement for the mat onto the field,
whereby the preparation arrangement (5.1, 5.2) has a lesser width than the pressing arrangement (7) and a distributing arrangement is arranged between the preparation arrangement (5.1, 5.2) and the pressing arrangement (7) with the omission of a dosing device,
***characterised in that*** the distribution arrangement comprises a distributing plate (23) arranged over the flow of harvested material, on which web plates (24) are arranged perpendicular to it, which are aligned in the direction of the harvested material, whereby as seen in the longitudinal direction of the distributing plate (23) at least one web plate (24) positioned in the central region is arranged essentially in the longitudinal direction of the flow of harvested material and the web plates (24) arranged toward the two outer regions of the distributing plate (23) deviate from the longitudinal direction such that harvested material coming from the preparation arrangement (5.1, 5.2) is distributed largely over the width of the pressing arrangement (7).

2. A self-propelled harvesting machine according to Claim 1, ***characterised in that*** the web plates (24) are at least in part able to turn, whereby the turning movement is effected especially automatically depending on the volume of the harvested material.

3. A self-propelled harvesting machine according to Claim 1 or Claim 2, ***characterised in that*** the web plates (24) are formed either straight or curved in the shape of an arc.

4. A self-propelled harvesting machine according to one of the foregoing Claims,
***characterised in that*** the distributing arrangement can be pivoted out of the flow of harvested material, at least partly, especially completely.

5. A self-propelled harvesting machine according to one of the foregoing Claims,
***characterised in that*** the distributing arrangement can be pivoted out depending on the volume of the harvested material, especially is automatically pivoted.

6. A self-propelled harvesting machine according to one of the foregoing Claims,
***characterised in that*** a tined roller (20) is arranged between the preparation arrangement (5.1, 5.2) and the distributing plate (23), essentially above the flow of harvested material.

7. A self-propelled harvesting machine according to one of the foregoing Claims,
***characterised in that*** a conveyor belt (6) is arranged at least in the region between the end of the preparation arrangement (5.1, 5.2) and the beginning of the pressing arrangement (7).

8. A self-propelled harvesting machine according to one of the foregoing Claims,
***characterised in that*** an arrangement is provided in the region of the forwarding arrangement (4) to adjust the width of an area of transport of the forwarding arrangement (4), especially to make it smaller.

9. A self-propelled harvesting machine according to one of the foregoing Claims,
***characterised in that*** the distributing arrangement which has web plates (24) arranged on the distributing plate (23) can be set into an oscillating motion.

10. A self-propelled harvesting machine according to one of the foregoing Claims,
***characterised in that*** at least some of the web plates (24) can be set into an oscillating motion.

11. A self-propelled harvesting machine according to one of the foregoing Claims,
***characterised in that*** seen in the direction of the flow of harvested material, a further arrangement is arranged for the control of the flow of harvested material.

## Revendications

1. Moissonneuse automotrice (1) notamment pour du fourrage comprenant :
• une installation de coupe (2) pour couper le produit de récolte,
• une installation de transfert (4) pour transférer le produit de récolte,
• une installation de préparation (5.1, 5.2) pour préparer le produit de récolte,
• une presse (7) en aval de l'installation de préparation (5. 1, 5. 2) pour presser le produit de récolte et former une nappe et,
• une installation de dépôt pour déposer la nappe sur le champ,
l'installation de préparation (5.1, 5.2) ayant une largeur inférieure à celle de la presse (7) et une installation de répartition est prévue entre l'installation de préparation (5.1, 5.2) et la presse (7) avec suppression d'une installation de dosage,
caractérisée en ce que
l'installation de répartition se compose d'une tôle de répartition (23) située au-dessus du flux de produit de récolte, cette tôle ayant des nervures (24) perpendiculaires à la tôle, ces nervures étant dirigées dans la direction du produit de récolte et selon la direction longitudinale de la tôle de répartition (23) au moins une nervure (24) qui se trouve dans la zone centrale de l'axe longitudinal, est essentiellement dirigée dans la direction longitudinale du flux de produit de récolte et les autres nervures (24) situées dans la direction des deux autres zones extérieures de la tôle de guidage (23) sont déviées par rapport à la direction longitudinale pour que le produit venant de l'installation de préparation (5.1, 5.2) soit réparti sur une largeur correspondant pratiquement à la largeur de la presse (7) .

2. Moissonneuse automotrice selon la revendication 1,
caractérisée en ce que
les nervures (24) sont au moins en partie pivotantes, le mouvement de pivotement se faisant notamment de manière automatique en fonction du volume de produit à traiter.

3. Moissonneuse automotrice selon la revendication 1 ou 2,
caractérisée en ce que
les nervures (24) sont droites et/ou cintrées.

4. Moissonneuse automotrice selon l'une quelconque des revendications précédentes
caractérisée en ce que
l'installation de répartition est dégagée au moins en partie et notamment en totalité du flux de produit.

5. Moissonneuse automotrice selon l'une quelconque des revendications précédentes,
caractérisée en ce que
l'installation de répartition peut se dégager notamment de manière automatique en fonction du volume de produit.

6. Moissonneuse automotrice selon l'une quelconque des revendications précédentes,
caractérisée en ce qu'
un cylindre à dents (20) est prévu entre l'installation de préparation (5.1, 5.2) et la tôle de répartition (23) essentiellement au-dessus du flux de produit.

7. Moissonneuse automotrice selon l'une quelconque des revendications précédentes,
caractérisée en ce qu'
au moins dans la zone comprise entre l'extrémité de l'installation de préparation (5.1, 5.2) et l'entrée de la presse (7), il est prévu une bande transporteuse (6).

8. Moissonneuse automotrice selon l'une quelconque des revendications précédentes,
caractérisée
par une installation prévue dans la zone de l'installation de transfert (4) pour régler la largeur de la zone de transfert de l'installation de transfert (4) notamment réduire la largeur.

9. Moissonneuse automotrice selon l'une quelconque des revendications précédentes,
caractérisée en ce que
l'installation de répartition comportant des nervures (24) montées sur la tôle de répartition (23) peut etre commandée suivant un mouvement oscillant.

10. Moissonneuse automotrice selon l'une quelconque des revendications précédentes,
caractérisée en ce qu'
au moins une partie des nervures (24) peut exécuter un mouvement oscillant.

11. Moissonneuse automotrice selon l'une quelconque des revendications précédentes,
caractérisée en ce qu'
en aval de l'installation de répartition selon le sens de passage des produits, il est prévu une autre installation pour influencer le flux de produit.
